# EUROPEAN PATENT APPLICATION

(11) **EP 4 801 046 A1**
(43) Date of publication of application: **02.09.2026**
(21) Application number: 24880947.7
(22) Date of filing: 16.04.2024
(51) Int. Cl.: H04N 23/50, H04N 23/54

(54) **MINIATURIZED CAMERA**

(30) Priority: 24.10.2023 CN 202322852388 U
(71) Applicant: Tung Thih Electron (Xiamen) Co., Ltd., Xiamen Fujian 361000 (CN)
(72) Inventor: YE, Shenglong, Xiamen, Fujian 361000 (CN); SUN, Guodong, Xiamen, Fujian 361000 (CN); YING, Song, Xiamen, Fujian 361000 (CN)
(74) Representative: CAPRI
(86) International application number: PCT/CN2024/087910
(87) International publication number: WO 2025/086568

(57) **Abstract**

A miniaturized camera, comprising: a shell, which comprises a front cover and a rear cover, which are detachably connected to each other; an LED PCB and several supporting members, which are arranged inside the shell, one end of each supporting member being fixedly arranged on the shell, and the other end of the supporting member tightly pressing the LED PCB against the front cover or the rear cover; and a sensing assembly, which comprises a sensor PCB and a terminal seat and a lens group, which are respectively arranged on two sides of the sensor PCB, wherein the lens group extends to the part of the shell where one side of the LED PCB is provided and is used for focusing an external light source, and the sensor PCB and the LED PCB are respectively provided with a male terminal and a female terminal, and are electrically connected to each other by means of the male terminal and the female terminal. Thus, the miniaturized camera having a compact structure is formed. It is measured that the length of the camera is 28 mm, the width thereof is 25 mm, and the height thereof is approximately 28 mm; and the assembly manner for the camera is simple, such that labor costs can be saved on.

## Description

The present application claims the priority to Chinese Patent Application No. 202322852388.5, titled "MINIATURIZED CAMERA", filed on October 24, 2023 with the China National Intellectual Property Administration, which is incorporated herein by reference in its entirety.

### FIELD

The present application relates to the technical field of cameras, and in particular to a miniaturized camera.

### BACKGROUND

During vehicle operation, some drivers are lack of safety awareness and engage in dangerous driving behaviors such as drinking water, smoking, making phone calls, losing concentration, or driving while fatigued. These behaviors pose significant safety hazards. Therefore, in order to address these issues, a Driver Monitor System (DMS) has been developed (hereinafter referred to as the DMS system). The DMS system may monitor the fatigue driving, distraction and other hazardous behaviors of the drivers in real time, and provide real-time reminders to the drivers when their attention is not focused on the driving behavior.

The DMS system monitors the driver's position in real time via cameras, which are typically mounted at various locations within the vehicle (such as on the A-pillar, the steering column, the central control dashboard, or the side above the driver's head) to capture scenes from different angles. In order to meet the aesthetic requirements of the vehicle and due to the limited space available at the camera mounting location, a camera with as small a size specification as possible is required.

### SUMMARY

In view of the deficiencies in conventional technologies, an object of the present application is to provide a miniaturized camera to address the issues mentioned in the background section above.

The present application is implemented through the technical solutions as follows.

A miniaturized camera includes a shell, which includes a front cover and a rear cover that are detachably connected to each other. The miniaturized camera further includes an LED printed circuit board (PCB) and at least one support member arranged inside the shell. Each support member has one end fixed to the shell and the other end configured to press the LED PCB against the front cover or the rear cover.

The miniaturized camera further includes a sensing assembly, which includes a sensor PCB, and a connector and a lens group that are respectively arranged on both sides of the sensor PCB. The lens group extends to a side of the shell where the LED PCB is arranged and is configured to focus an external light source.

The sensor PCB and the LED PCB are respectively provided with a male terminal and a female terminal, and are electrically connected to each other via the male terminal and the female terminal.

Furthermore, the front cover is provided with an upper clamping surface, and the rear cover is provided with a lower clamping surface. The upper clamping surface and the lower clamping surface are configured to cooperate to limit a movement of the sensor PCB.

Furthermore, the support member and the rear cover are integrally formed, and the LED PCB is pressed against the front cover by the support member.

Furthermore, each support member includes a connecting plate, an upper support column and a lower support column. The connecting plate is connected to the upper support column and the lower support column.

Furthermore, multiple upper support columns are provided and spaced apart on an edge of the connecting plate. Each upper support column includes a support surface that is configured to support a bottom surface of the sensor PCB.

Furthermore, a guide column extends upward from each support surface, and has a guide bevel extending obliquely towards the support surface. The sensor PCB is formed with avoidance holes, configured to allow passage of the respective guide columns and matched with the respective guide columns.

Furthermore, multiple lower support columns are provided and spaced apart under an edge of the connecting plate, and a separation groove is provided at a middle of a bottom of each lower support column and extends through both sides of this lower support column, so that two support legs are formed for this lower support column. When the support member is compressed, the separation groove is configured to facilitate deformation of the two support legs.

Furthermore, a peripheral plate is arranged along an edge of the connecting plate. The upper support column and the lower support column are arranged in a collinear manner, and the upper support column is connected to the lower support column via the peripheral plate.

Furthermore, the front cover is provided with an optical filter, and the sensing assembly includes a fixator. The fixator is configured to fix the lens group to the sensor PCB and to facilitate extending the lens group to abut against the optical filter.

Furthermore, a U-shaped groove is formed in the LED PCB to allow passage of the fixator. Two LED lamps are arranged on the LED PCB at both sides of the lens group respectively.

Furthermore, the lens group and the fixator are integrally formed.

Furthermore, the lens group and the fixator integrally formed are arranged on the sensor PCB through an active alignment process.

Furthermore, an LED lamp is arranged on the LED PCB at one side of the lens group.

Furthermore, the connector is a 1+2 Fakra connector.

The beneficial effects of the present application are as follows. A miniaturized camera includes a shell, which includes a front cover and a rear cover that are detachably connected to each other. The miniaturized camera further includes an LED PCB and at least one support member arranged inside the shell. One end ofeach support member is fixed to the shell, and the other end of each support member presses the LED PCB against the front cover or the rear cover. The miniaturized camera further includes a sensing assembly, which includes a sensor PCB, and a connector and a lens group that are respectively arranged on both sides of the sensor PCB. The lens group extends to a side of the shell where the LED PCB is arranged and is configured to focus an external light source. The sensor PCB and the LED PCB are respectively provided with a male terminal and a female terminal, and are electrically connected to each other via the male terminal and the female terminal, thereby forming a compact miniaturized camera. It is measured that the miniaturized camera has a length of 28mm, a width of 25mm, and a height of about 28mm. Moreover, the camera is easy to assemble, thereby saving labor costs.

### BRIEF DESCRIPTION OF THE DRAWINGS

FIG. 1 is a perspective view of the present application.
FIG. 2 is a schematic view showing an internal structure of the present application.
FIG. 3 is an exploded view of the present application.
FIG. 4 is another exploded view of the present application.
FIG. 5 is a perspective view of a support member of the present application.
FIG. 6 is a front view of the present application.
FIG. 7 is a cross-sectional view of the present application taken along line A-A in FIG. 6.
FIG. 8 is a schematic view of a second embodiment of the support member of the present application.
FIG. 9 is a schematic view of a third embodiment of the support member of the present application.

Numeral references in the accompanying drawings are listed as follows:
1 shell; 11 front cover; 111 optical filter; 112 upper clamping surface; 12 rear cover; 121 lower clamping surface; 13 screw; 2 lighting assembly; 21 LED PCB; 211 U-shaped groove; 22 LED lamp; 23 female terminal; 3 sensing assembly; 31 sensor PCB; 311 avoidance hole; 32 connector; 33 lens group; 34 fixator; 35 male terminal; 4 support member; 41 connecting plate; 42 upper support column; 421 support surface; 422 guide column; 43 lower support column; 431 separation groove; 432 support leg; 44 peripheral plate; 45 reinforcing rib.

### DETAILED DESCRIPTION OF THE EMBODIMENTS

In order to make the objectives, technical solutions and advantages of the embodiments of the present application clearer, the technical solutions in the embodiments of the present application will be described clearly and completely below with reference to the accompanying drawings herein. Apparently, the embodiments described below are some rather than all of the embodiments of the present application. Based on the embodiments of the present application, all other embodiments obtained by those skilled in the art without any creative work fall within the protection scope of the present application. Accordingly, the following detailed description of the embodiments of the present application as provided in the accompanying drawings is not intended to limit the scope as claimed by the present application, but merely for showing the selected embodiments of the present application.

In the description of the present application, terms such as "first" and "second" are used merely for descriptive purposes and should not be understood as indicating or implying relative importance or implicitly indicating the number of indicated technical features. Therefore, a feature defined by "first" or "second" may explicitly or implicitly include one or more of such features.

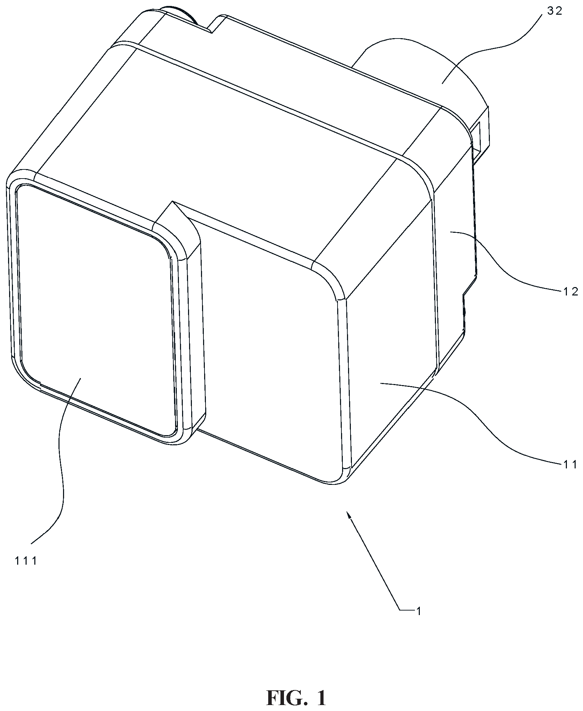

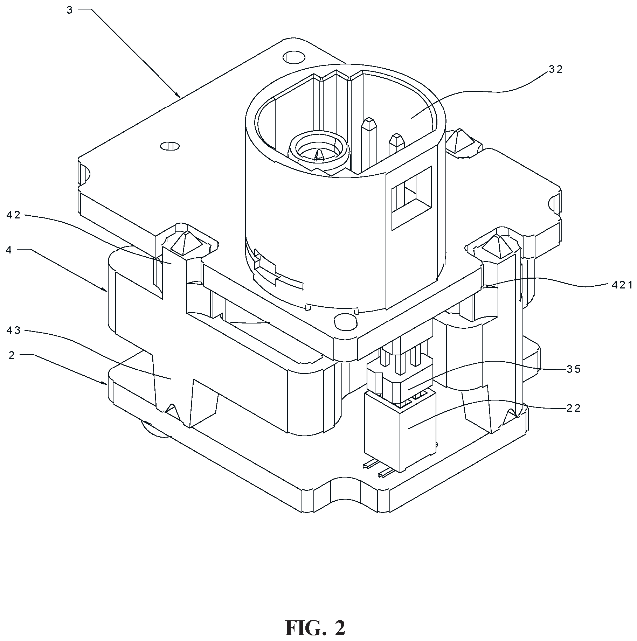

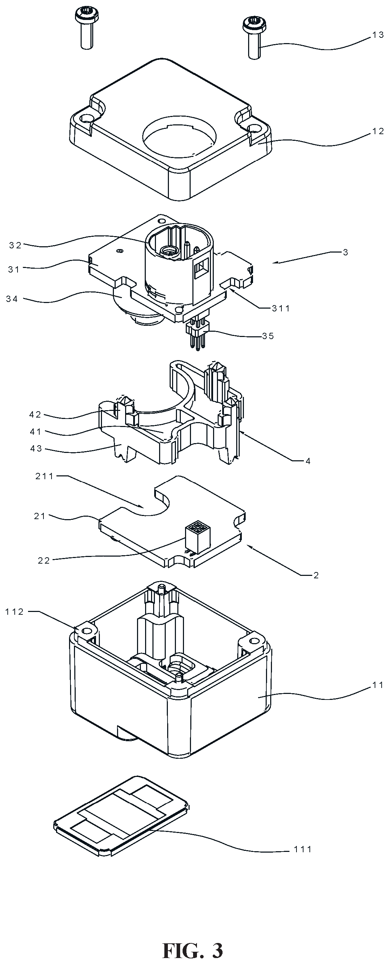

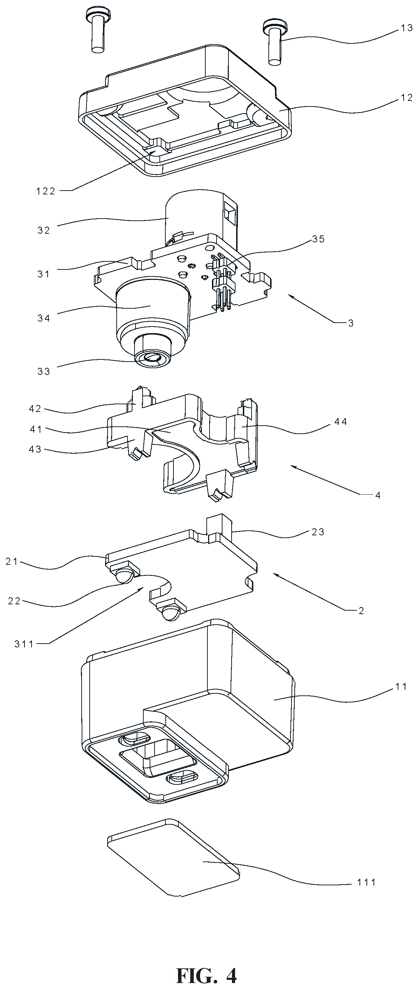

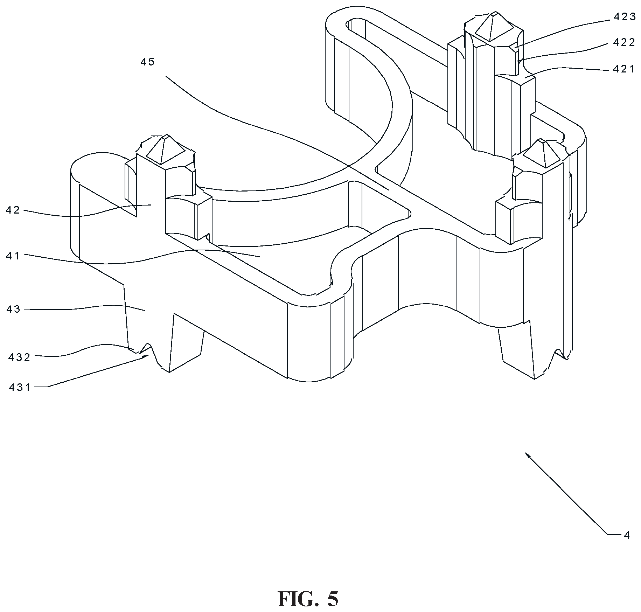

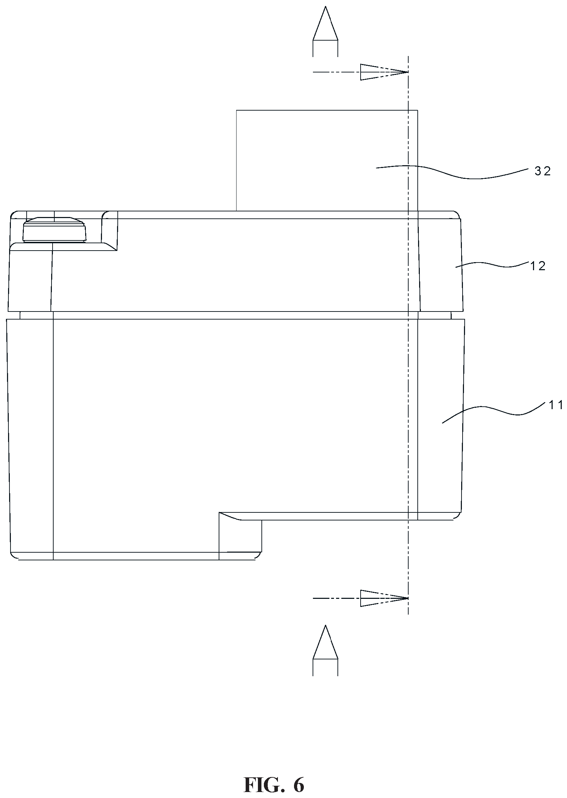

Referring to FIGS. 1 to 9, a miniaturized camera includes a shell 1. The shell 1 includes a front cover 11 and a rear cover 12 that are detachably connected to each other via two screws 13. A lighting assembly 2 and a sensing assembly 3 are mounted inside the shell 1.

The lighting assembly 2 includes an LED PCB 21 and an LED lamp 22. The front cover 11 is provided with an optical filter 111, through which the light emitted by the LED lamp 22 is irradiated to the outside of the shell 1.

The sensing assembly 3 includes a sensor PCB 31, a connector 32, a lens group 33 and a fixator 34. The connector 32 and the lens group 33 are respectively arranged on both sides of the sensor PCB 31, and the connector 32 partially extends through the rear cover 12 and is electrically connected to an external component. The front cover 11 is provided with the optical filter 111. The fixator 34 is configured to fix the lens group 33 to the sensor PCB 31 and to facilitate extending the lens group 33 to abut against the optical filter 111. A U-shaped groove 211 is formed in the LED PCB 21 to allow passage of the fixator 34.

The sensor PCB 31 and the LED PCB 21 are respectively provided with a male terminal 35 and a female terminal 23, and are electrically connected to each other via the male terminal 35 and the female terminal 23.

Three embodiments of a support member 4 are described in the present application, and two embodiments for limiting the movement of the LED PCB 21 through different structures of the support member 4 are provided in the present application.

In a first embodiment for limiting the movement of the LED PCB 21, referring to FIGS. 1 to 7, a first embodiment of the support member 4 is adopted. The shell 1 further includes the support member 4. The support member 4 and the shell 1 are separately injection-molded, and the support member 4 is configured to limit the movement of the LED PCB 21.

As shown in FIGS. 1 to 7, the support member 4 includes a connecting plate 41, an upper support column 42, a lower support column 43, a peripheral plate 44 and a reinforcing rib 45, all of which are integrally injection-molded. The upper support column 42 and the lower support column 43 are respectively arranged on an upper end face and a lower end face of the connecting plate 41, and the reinforcing rib 45 is in cross-connection with the peripheral plate 44.

The number of the upper support column 42 and the number of the lower support column 43 may include but not limited to three. In an embodiment, the upper support columns 42 and the lower support columns 43 are arranged and spaced apart on an edge of the connecting plate 41. Two of the support columns are arranged on both sides of the fixator 34, and the remaining support column is arranged on a side away from the fixator 34. This three-point support configuration ensures the stability of the support member 4 when it is utilized to support the lighting assembly 2 and the sensing assembly 3.

The upper support columns 42 are configured to support the sensing assembly 3. Specifically, each upper support column 42 includes a support surface 421 that is configured to support a bottom surface of the sensor PCB 31. A guide column 422 extends upward from each support surface 421, and has a guide bevel extending obliquely towards the support surface 421. The sensor PCB 31 is formed with avoidance holes 311, configured to allow passage of the corresponding guide columns 422 and matched with the corresponding guide columns 422. In this way, the upper support columns 42 may not only provide stable support for the sensing assembly 3, but also serve to position the sensing assembly 3 during camera assembly.

The lower support columns 43 are configured to support the lighting assembly 2. Specifically, a separation groove 431 is provided at a middle of a bottom of each lower support column 43 and extends through both sides ofthis lower support column 43, resulting in two support legs 432 formed for each lower support column 43. When the front cover 11 and the rear cover 12 are fastened together, the support member 4 is compressed, and the separation groove 431 provides a deformation space, allowing the two support legs 432 to deform slightly. This ensures the stability and firmness of the lighting assembly 2 and the sensing assembly 3 arranged inside the shell 1. Specifically, the separation groove 431 has an inverted V shape, which further facilitates the compression and deformation of the support legs 432.

Preferably, each upper support column 42 and the corresponding lower support column 43 are arranged in a collinear manner, and are connected to each other via the peripheral plate 44. This arrangement further improves the firmness of the support member 4.

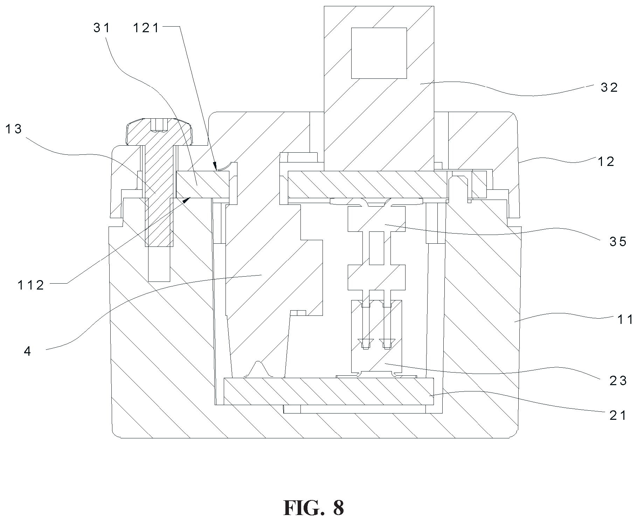

In a second embodiment for limiting the movement of the LED PCB 21, as shown in FIG. 8, a second embodiment of the support member 4 is adopted, which differs from the first embodiment in that the support member 4 is integrally formed with the rear cover 12, and the LED PCB 21 is tightly pressed against the front cover 11 by the support member 4.

Two embodiments for limiting the movement of the sensor PCB 31 are provided in the present application.

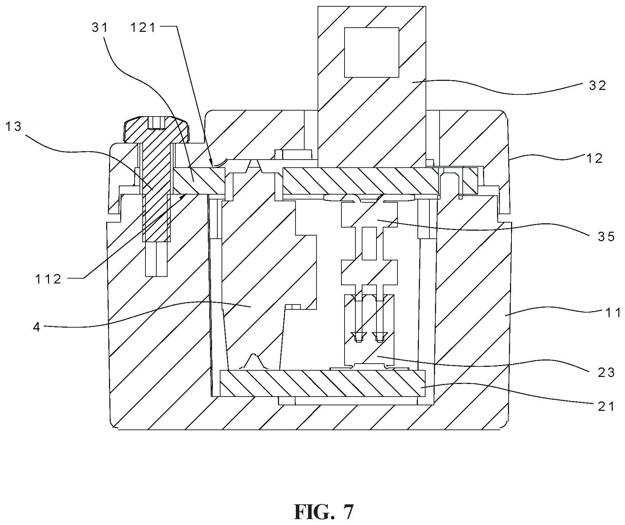

Referring to FIG. 7, in the first embodiment for limiting the movement of the sensor PCB 31, it is not necessary to adopt the support member 4 for supporting the sensor PCB 31. The front cover 11 is provided with an upper clamping surface 112, and the rear cover 12 is provided with a lower clamping surface 121. The upper clamping surface 112 and the lower clamping surface 121 are configured to cooperate to limit a movement of the sensor PCB 31. During the process of fastening the front cover 11 and the rear cover 12 by the screws 13, a distance between the upper clamping surface 112 and the lower clamping surface 121 is decreased until the sensor PCB 31 is completely clamped, thereby limiting the movement of the sensor PCB 31. There are four upper clamping surfaces 112 evenly distributed along an edge of the front cover 11, and there are four lower clamping surfaces 121 evenly distributed along an edge of the rear cover 12.

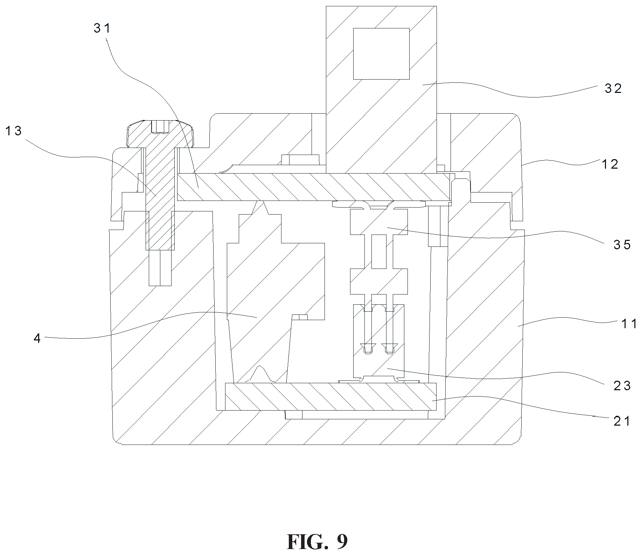

Referring to FIG. 9, in a second embodiment for limiting the movement of the sensor PCB 31, a lower surface of the sensor PCB 31 is supported by the support surface 421 of the upper support column 42 of the support member 4.

Given the adoption of the second embodiment for limiting the movement of the sensor PCB 31 and the limited reserved space for the snap-fit connection between the male terminal 35 and the female terminal 23 during assembly, there is a high precision requirement for the length dimensions of the upper support column 42 and the lower support column 43. Therefore, the most preferred implementation in the present application is to combine the first embodiment for limiting the movement of the LED PCB 21 with the first embodiment for limiting the movement of the sensor PCB 31. This combination effectively limits the movement of the lighting assembly 2 and the sensing assembly 3, preventing them from shifting within the shell 1 due to the external force. When assembling the camera adopting this combined embodiment, referring to FIGS. 1 to 7, the assembly process is as follows. First, the lighting assembly 2 is placed beneath the support member 4, ensuring that the lower surface of the sensing assembly 3 abuts against the support surface 421 of the upper support column 42. Next, the above assembly structure is placed into the front cover 11. Finally, the rear cover 12 is fastened to the front cover 11, completing the camera assembly. The assembly method is simple and cost-effective in terms of labor. During the process of fastening the rear cover 12 to the front cover 11, the lower surface of the sensing assembly 3 gradually detaches from the support surface 421 of the upper support column 42, and the support legs 432 of the lower support column 43 are deformed under pressure, thereby providing a preload force to limit the movement of the LED PCB 21. The redundant space under pressure ensures that during the assembly process, the male terminal 35 and the female terminal 23 are not subjected to pressure before the LED PCB 21, thereby preventing deformation of the two terminals due to pressure.

It is measured that the miniaturized camera according to the present application has a length of about 28mm, a width of 25mm, and a height of 28mm, featuring a compact structure. This enables the camera to be mounted at various locations within the vehicle (such as on the A-pillar, the steering column, the central control dashboard, or the side above the driver's head) to capture scenes from different angles. The relatively small size makes the product more versatile, allowing it to adapt to the mounting requirements at different locations across various automotive manufacturers. A single set of cameras may be adapted to various scenarios, offering a high degree of versatility and platformization.

In a case that a U-shaped design for the LED PCB 21 is adopted, there may be two LED lamps 22, which are arranged on the LED PCB 21 and distributed on both sides of the lens group 33 and close to the lens group 33, thereby minimizing the exposed area of the camera and achieving an aesthetically appealing appearance.

Also, the LED PCB 21 may be designed in a conventional shape, which is different from the above-mentioned U-shaped design. In this case, a LED lamp 22 may be arranged on one side of the lens group 33 and at a position away from the lens group 33. Specifically, there may be one or more LED lamps 22 arranged on the LED PCB 21. In this way, the distance between the LED lamp 22 and the lens group 33 is maximized, thereby enhancing the imaging performance of the miniaturized camera in the present application.

As an improvement, the lens group 33 and the fixator 34 may be integrally formed, thereby occupying less space and offering superior structural performance. In addition, an active alignment process may be employed to arrange the integrally formed lens group 33 and the fixator 34 on the sensor PCB 31. This design reduces the space occupied on the sensor PCB, allowing for a smaller sensor PCB, and consequently, a smaller overall external dimension for the camera.

The three-point support structure of the support member 4 is utilized to fix the LED PCB 21, eliminating the need for the fixing screws. This design avoids the issue of excessive space occupation on the LED PCB 21 caused by the fixing screws.

Each of the male terminal 35 and the female terminal 23 employs a four-pin inter-board connector, which has a small dimension and occupies less space on both the LED PCB 21 and the sensor PCB 31. This enables the PCB to be designed with smaller dimensions, thereby allowing for a reduction in the overall external dimensions of the camera.

The connector 32 adopts a two-in-one design (namely, the power connector and the signal connector are integrated into a single connector), which occupies less space on the PCB. This enables the PCB to be smaller, and consequently, the overall external dimensions of the camera may be reduced.

The front cover 11, the sensor PCB 31 and the rear cover 12 are fastened together via screws 13, and no additional screws are needed to fasten the sensor PCB 31, thereby saving space and making the product more compact.

The above embodiments are only preferred embodiments of the present application and are not intended to limit the present application. Those skilled in the art can make various modifications and variations to the embodiments of the present application. Any modifications, equivalent replacements and improvements made within the spirit and principle of the present application should fall within the protection scope of the present application.

## Claims

1. A miniaturized camera, comprising:
a shell (1), which comprises a front cover (11) and a rear cover (12) that are detachably connected to each other;
**characterized in that** the miniaturized camera further comprises:
an LED PCB (21) and at least one support member (4) arranged inside the shell (1), wherein each support member (4) has one end fixed to the shell (1) and the other end configured to press the LED PCB (21) against the front cover (11) or the rear cover (12); and
a sensing assembly (3), which comprises a sensor PCB (31), and a connector (32) and a lens group (33) that are respectively arranged on both sides of the sensor PCB (31), wherein the lens group (33) extends to a side of the shell (1) where the LED PCB (21) is arranged and is configured to focus an external light source;
wherein the sensor PCB (31) and the LED PCB (21) are respectively provided with a male terminal (35) and a female terminal (23), and the sensor PCB (31) and the LED PCB (21) are electrically connected to each other via the male terminal (35) and the female terminal (23).

2. The miniaturized camera according to claim 1, wherein the front cover (11) is provided with an upper clamping surface (112), the rear cover (12) is provided with a lower clamping surface (121), and the upper clamping surface (112) and the lower clamping surface (121) are configured to cooperate to limit a movement of the sensor PCB (31).

3. The miniaturized camera according to claim 1, wherein the support member (4) and the rear cover (12) are integrally formed, and the LED PCB (21) is pressed against the front cover (11) by the support member (4).

4. The miniaturized camera according to claim 1, wherein each support member (4) comprises a connecting plate (41), an upper support column (42) and a lower support column (43), and the connecting plate (41) is connected to the upper support column (42) and the lower support column (43).

5. The miniaturized camera according to claim 4, wherein a plurality of upper support columns (42) are provided and spaced apart on an edge of the connecting plate (41), and each upper support column (42) comprises a support surface (421) that is configured to support a bottom surface of the sensor PCB (31).

6. The miniaturized camera according to claim 5, wherein a guide column (422) extends upward from each support surface (421) and has a guide bevel extending obliquely towards the support surface (421), and the sensor PCB (31) is formed with avoidance holes (311) configured to allow passage of the respective guide columns (422) and matched with the respective guide columns (422).

7. The miniaturized camera according to claim 4, wherein a plurality of lower support columns (43) are provided and spaced apart under an edge of the connecting plate (41), and a separation groove (431) is provided at a middle of a bottom of each lower support column (43) and extends through both sides of this lower support column, so that two support legs are formed for this lower support column (43), wherein the separation groove (431) is configured to facilitate deformation of the two support legs when the support member (4) is compressed.

8. The miniaturized camera according to claim 4, wherein a peripheral plate (44) is arranged along an edge of the connecting plate (41), the upper support column (42) and the lower support column (43) are arranged in a collinear manner respectively, and the upper support column (42) is connected to the lower support column (43) via the peripheral plate (44).

9. The miniaturized camera according to any one of claims 1 to 8, wherein the front cover (11) is provided with an optical filter (111), and the sensing assembly (3) comprises a fixator (34), which is configured to fix the lens group (33) to the sensor PCB (31) and to facilitate extending the lens group (33) to abut against the optical filter (111).

10. The miniaturized camera according to claim 9, wherein a U-shaped groove (211) is formed in the LED PCB (21) to allow passage of the fixator (34), and two LED lamps (22) are arranged on the LED PCB (21) at both sides of the lens group (33) respectively.

11. The miniaturized camera according to claim 9, wherein the lens group (33) and the fixator (34) are integrally formed.

12. The miniaturized camera according to claim 11, wherein the lens group (33) and the fixator (34) integrally formed are arranged on the sensor PCB (31) through an active alignment process.

13. The miniaturized camera according to claim 1, wherein an LED lamp (22) is arranged on the LED PCB (21) at one side of the lens group (33).

14. The miniaturized camera according to claim 1, wherein the connector (32) is a 1+2 Fakra connector.
